# EUROPEAN PATENT SPECIFICATION

(11) **EP 2 944 455 B1**
(45) Date of publication and mention of the grant of the patent: **12.04.2023**
(21) Application number: 14400034.6
(22) Date of filing: 14.05.2014
(51) Int. Cl.: B29C 73/06, B29C 73/04, B29C 73/26

(54) **A method of repairing a sandwich component having a honeycomb core which is arranged between a first and a second cover plate**
Verfahren zur Reparatur einer Sandwichkomponente mit einem zwischen einer ersten und einer zweiten Abdeckplatte angeordneten Wabenkern
Procédé de réparation d'un composant en sandwich ayant un noyau en nid d'abeilles qui est disposée entre une première et une seconde plaque de recouvrement

(43) Date of publication of application: 18.11.2015
(73) Proprietor: AIRBUS HELICOPTERS DEUTSCHLAND GmbH, 86609 Donauwörth (DE)
(72) Inventor: Vogel, Dominik, 86462 Langweid (DE); Strohmaier, Thorsten, D-86511 Schmiechen (DE)
(74) Representative: GPI & Associés

(56) References cited:
- EP-A1- 1 870 228
- EP-A1- 2 517 865
- EP-A1- 2 540 484
- EP-A2- 1 972 429
- EP-A2- 1 985 538
- WO-A1-2007/137814
- GB-A- 937 918
- US-A- 3 913 219

## Description

The invention is related to a method of repairing a sandwich component having a honeycomb core with an associated core height, which is arranged between a first cover plate and a second cover plate, said sandwich component comprising a damaged area including a cover plate crack of the first cover plate and a deterioration of said honeycomb core adjacent to said cover plate crack, said method comprising the features of claim 1.

In the field of aviation, weight optimization issues are crucial so that various aircraft components are implemented in sandwich construction in order to reduce their weight. Such components are generally referred to as "sandwich components" and may be comprised of plural differing materials, each having associated characteristics and advantages. By combining these plural differing materials into a single sandwich component, the latter can be provided at least to some extent with the characteristics and advantages of all combined materials.

By way of example, a suitable sandwich component can be used to implement a cabin floor of a helicopter, which is mounted to the helicopter's fuselage via frame and stringers thereof. Such a cabin floor may e.g. comprise a honeycomb core with an associated core height that is arranged between an upper cover plate and a lower cover plate, wherein at least the lower cover plate is attached to the fuselage. The honeycomb core is usually glued to the upper and lower cover plates and implemented as lightweight as possible in order to reduce the overall weight of the cabin floor.

In such a configuration, the cabin floor has a predefined thickness that is at least essentially determined by the associated core height of the honeycomb core in order to provide the cabin floor with a required bearing strength and stiffness. More specifically, the cabin floor is generally embodied such that it exhibits a comparatively great area moment of inertia and, thus, a comparatively high flexural rigidity, wherein the honeycomb core is adapted to provide required shear rigidity in order to prevent formation of bumps and wrinkles in the upper and lower cover plates.

In operation, an excessive use of the helicopter and, more specifically, of its cabin floor can lead to damages of the cabin floor that need to be repaired in order to guarantee a reliable and secure continued utilization of the helicopter. Such damages usually exhibit a cover plate crack of the upper cover plate of the sandwich component that implements the cabin floor, as well as a deterioration of the honeycomb core adjacent to the cover plate crack, which together define a damaged area of the sandwich component. This damaged area is preferably repaired starting from the upper cover plate side of the sandwich component that implements the cabin floor, so that a preliminary removal of the cabin floor from the helicopter for accessing the lower cover plate side of the sandwich component is not required.

In order to repair such a damaged area starting from the upper cover plate side, the damaged area is extensively drilled out, whereby a large-scale hole is created in the upper cover plate around the cover plate crack and also in the honeycomb core, such that the deteriorated part of the honeycomb core is removed. The region of the removed deteriorated part is then filled with a suitable doubler patch and additional filling material and, then, the upper cover plate is reconstructed by means of a suitable repair patch and/or an associated doubler patch.

The document EP 2 108 504 B1 describes a repair method for repairing a sandwich component using a suitable doubler patch and additional filling material. The doubler patch is introduced into the region of the removed deteriorated part starting from an open lateral side of the sandwich component and, subsequently, glued to the upper cover plate such that the region of the removed deteriorated part is closed in the direction of the upper cover plate. Then, a suitable filling material is introduced into the honeycomb core to fill the region of the removed deteriorated part, i.e. to fill space and gaps between the honeycomb core and the doubler patch in the region of the removed deteriorated part.

However, filling the region of the removed deteriorated part with the suitable filling material leads to a creation of a discontinuity of the honeycomb core in this region. This discontinuity leads in turn to a reduction of the shear rigidity provided by the honeycomb core in this region and, furthermore, to a reduction of the flexural rigidity and stiffness of the sandwich component as a whole.

As the reduction of shear rigidity and flexural rigidity and stiffness may reduce lifetime of the sandwich component, the creation of such a discontinuity must be avoided. Consequently, use of the filling material should preferably be omitted and the region of the removed deteriorated part should be filled, i.e. repaired with another suitable material, such as e.g. a suitable replacement honeycomb.

The document EP 1 859 922 B1 describes a repair method for repairing a sandwich component using such a replacement honeycomb. According to this repair method, the replacement honeycomb, which comprises at least approximately the dimensions of the region of the removed deteriorated part of the honeycomb core, is pressed into this region and then glued at that place.

However, for enabling introduction of the replacement honeycomb in the region of the removed deteriorated part of the honeycomb core, the upper cover plate must not only be drilled out around the cover plate crack, but instead over an area that comprises at least approximately the dimensions of the replacement honeycomb. This usually leads to an undesired and excessive removal of intact, i.e. undamaged parts of the upper cover plate.

Furthermore, for enabling a required mechanical connection between the replacement honeycomb and the upper cover plate, which is required to enable a required flux of force from the replacement honeycomb to the upper cover plate, and thus a transmission of respective shear loads, some overlapping area needs to be provided between the upper cover plate and the replacement honeycomb. This overlapping area is usually created by further enlarging the region of the removed deteriorated part in the honeycomb core, e.g. by means of milling, so that a replacement honeycomb having a greater diameter than the area that is drilled out in the upper cover plate can be introduced into the region of the removed deteriorated part. The replacement honeycomb is then connected to the upper cover plate in the overlapping area by means of an adhesive bond.

However, the replacement honeycomb is usually almost incompressible or only slightly reversibly compressible, so that a deterioration of the replacement honeycomb may occur during its introduction into the region of the removed deteriorated part of the honeycomb core through the upper cover plate, especially if the replacement honeycomb is not guided exactly perpendicular to the upper cover plate. In order to avoid such a deterioration and as the replacement honeycomb is usually almost incompressible or only slightly reversibly compressible, the diameter of the replacement honeycomb can only be selected slightly greater than the area that is drilled out in the upper cover plate, so that the overlapping area merely comprises comparatively small dimensions. This may, however, lead to an insufficient connection between the replacement honeycomb and the upper cover plate, in particular if the overlapping area is simply too small or if the replacement honeycomb is incorrectly positioned in the honeycomb core. Such an insufficient connection may in turn lead to stress peaks that negatively impact the adhesive bond. More specifically, great variations in shear forces occurring in operation between the upper cover plate and the replacement honeycomb may act on the adhesive bond in a manner that can lead to a degeneration of the adhesive bond up to the point of delamination.

The document EP 1 972 429 A2 describes a repair method for repairing a composite structure having a perforated skin and a honeycomb core, wherein a portion of the honeycomb core is damaged. By means of this repair method, a portion of the honeycomb core and a back skin of the composite structure are replaced in such a way that the composite structure maintains its structural, acoustic, and dimensional properties. More specifically, the damaged honeycomb core and a portion of the back skin are removed or cut-out in the damaged area to expose the face skin of the composite structure. Then, a top composite layer of the face skin is removed in the damaged area and a repair layer is bonded to the face skin at the location of the removed top composite layer and a replacement honeycomb core is introduced into the composite structure. This replacement honeycomb core is bonded to the honeycomb core by means of an adhesive and to an adhesive layer of the repair layer. Finally, a replacement back skin is attached by means of an adhesive layer to the back skin of the composite structure and to the replacement honeycomb core. This replacement back skin is, then, reinforced by a cover ply.

EP 2 540 484 A1 discloses a helically rolled up repair element.

It is, therefore, an object of the present invention to provide a method of repairing a sandwich component having a honeycomb core with an associated core height, which is arranged between a first cover plate and a second cover plate, that overcomes the above described drawbacks and that allows to repair the sandwich component using a replacement honeycomb that can be securely and reliably connected to the first and/or second cover plates.

This object is solved by a method of repairing a sandwich component with the features of claim 1.

More specifically, according to the invention a method of repairing a sandwich component having a honeycomb core with an associated core height, which is arranged between a first cover plate and a second cover plate, is provided. Said sandwich component comprises a damaged area including a cover plate crack of the first cover plate and a deterioration of said honeycomb core adjacent to said cover plate crack. Said method comprises at least the steps of creating a repair opening having a maximum repair opening diameter in said first cover plate; creating a repair cavity in said honeycomb core, said repair cavity having a first maximum diameter that is at least equal to a maximum deterioration diameter associated with said deterioration of said honeycomb core and further having a depth that is at least substantially equal to said associated core height of said honeycomb core; introducing a helically rolled-up repair element in compressed form into said repair cavity, said helically rolled-up repair element in said compressed form having an associated element height that is at most equal to said associated core height of said honeycomb core and further having a second maximum diameter that is maximally equal to said maximum repair opening diameter; and allowing said helically rolled-up repair element in said compressed form to expand in said repair cavity from said second maximum diameter into an expanded form with a third maximum diameter which is greater than said second maximum diameter.

The inventive method of repairing a sandwich component having a damaged area with a cover plate crack in its accessible upper cover plate preferably starts from this damaged upper cover plate. Thus, the undamaged lower cover plate is not drilled through and, accordingly, kept intact and undamaged. Furthermore, as the inventive method of repairing a sandwich component is performed starting from its accessible upper cover plate, a repositioning of the sandwich component is not required. In other words, if the sandwich component implements, for instance, a cabin floor of a helicopter with the upper cover plate pointing to an interior of the cabin, this cabin floor does not need to be removed from the helicopter in order to allow reparation thereof.

Advantageously, deteriorated honeycomb core material is replaced by replacement honeycomb material having, preferentially, at least similar material properties. Preferably, the replacement honeycomb material comprises wall elements defining the helically rolled-up repair element that are at least positioned perpendicular relative to the upper cover plate, so that a required flux of force from the replacement honeycomb material to the upper cover plate and, thus, a transmission of respective shear loads can be guaranteed, while occurrence of harmful stress peaks can be avoided. The wall elements are preferably connected by a plurality of wall connectors that are provided in bridge-like form as so-called leporello-foldings.

According to one aspect, the wall elements and/or wall connectors comprise paper or paperboard that is impregnated with synthetic resin. Alternatively, the wall elements and/or wall connectors comprise a preferably activatable and/or electrically conductive shape memory alloy that preferentially comprises metal. In this case, the helically rolled-up repair element can be provided e.g. as a string- or strand-shaped component, so that a respectively required helically rolled-up repair element can be cut off from this string- or strand-shaped component as required, i.e. with a given length depending on the associated core height of the honeycomb core to be repaired. Providing the helically rolled-up repair element as string- or strand-shaped component enables manufacturing of the helically rolled-up repair element as bulk stock using the extrusion technique, thereby reducing the manufacturing costs.

Preferably, the helically rolled-up repair element in compressed form is provided with a diameter that is less than a diameter of a repair opening created in the upper cover plate, so that the helically rolled-up repair element in compressed form can be introduced through said repair opening into the repair cavity without being damaged or further compressed. The helically rolled-up repair element in compressed form then advantageously expands in the repair cavity either in a self-actuating manner or upon external activation and adapts itself to the form of the repair cavity. Thus, the repair cavity does not need to have a precise form and can be created within a broad range of tolerances as well as with different basic forms, such as e.g. circular, oval or even polygonal.

Furthermore, as the diameter of the helically rolled-up repair element in compressed form can be significantly smaller than the diameter of the repair cavity, the upper cover plate only needs to be drilled out in a restricted area for creating a suitable repair opening for introduction of the helically rolled-up repair element in compressed form. The repair opening preferably encompasses at most the region of the cover plate crack in the upper cover plate, so that an undesired excessive drilling out of the upper cover plate can be avoided and even reduced to an absolute necessary minimum. In other words, only a comparatively small repair opening must be created in the upper cover plate for repairing a comparatively large-scale deterioration in the honeycomb core.

According to a preferred embodiment, said step of allowing said helically rolled-up repair element in said compressed form to expand in said repair cavity comprises allowing said helically rolled-up repair element in said compressed form to expand such that the helically rolled-up repair element in said expanded form fills out said repair cavity at least substantially.

According to a further preferred embodiment, said maximum repair opening diameter is at least equal to a fourth maximum diameter associated with said cover plate crack, wherein said step of creating said repair cavity in said honeycomb core preferably comprises creating said repair cavity in said honeycomb core in prolongation to said repair opening.

According to a further preferred embodiment, said step of introducing said helically rolled-up repair element in said compressed form into said repair cavity comprises introducing said helically rolled-up repair element in said compressed form through said repair opening into said repair cavity.

According to a further preferred embodiment, said step of allowing said helically rolled-up repair element in said compressed form to expand in said repair cavity into said expanded form comprises activating an activatable shape memory alloy that is at least configured to support expansion of said helically rolled-up repair element in said repair cavity into said expanded form. Preferably, said activatable shape memory alloy constitutes at least partly said helically rolled-up repair element.

According to a further preferred embodiment, said activating of said activatable shape memory alloy comprises applying heat, electric current and/or ultrasonics to said activatable shape memory alloy.

According to a further preferred embodiment, said method further comprises the step of fixing said helically rolled-up repair element in said expanded form to said first cover plate and/or said second cover plate, such that said helically rolled-up repair element is oriented perpendicular to said first cover plate and/or said second cover plate.

According to a further preferred embodiment, said step of fixing said helically rolled-up repair element in said expanded form to said first cover plate and/or said second cover plate comprises gluing said helically rolled-up repair element in said expanded form to said first cover plate and/or said second cover plate.

According to a further preferred embodiment, said gluing of said helically rolled-up repair element in said expanded form to said first cover plate and/or said second cover plate comprises activating an activatable gluing layer provided on a first axial front end of said helically rolled-up repair element facing said first cover plate and/or an activatable gluing layer provided on a second axial front end of said helically rolled-up repair element facing said second cover plate.

According to a further preferred embodiment, said activating of said activatable gluing layer comprises applying heat, electric current and/or ultrasonics to said activatable gluing layer.

According to a further preferred embodiment, said applying of said heat to said activatable gluing layer comprises applying an electric current to a conductive component provided with said helically rolled-up repair element to generate said heat.

According to a further preferred embodiment, said method further comprises the steps of applying an electric current to a conductive component provided with said helically rolled-up repair element, after expansion of said helically rolled-up repair element in said repair cavity into said expanded form; and determining, on the basis of said electric current, whether said helically rolled-up repair element is correctly expanded in said repair cavity within predetermined tolerances and/or whether reparation affecting conditions, comprising humidity, occurred in said repair cavity.

The present invention further provides a repair element for repairing a sandwich component having a honeycomb core with an associated core height, which is arranged between a first cover plate and a second cover plate, said sandwich component comprising a damaged area including a cover plate crack of the first cover plate and a deterioration of said honeycomb core adjacent to said cover plate crack. Said repair element comprises a honeycomb wall element that is helically rolled-up and radially compressed into a compressed form with an associated compressed repair element diameter which is smaller than an expanded repair element diameter of said helically rolled-up honeycomb wall element in an expanded form. Said helically rolled-up honeycomb wall element comprises at least one conductive component that is configured to allow an electric current flow. In addition, a plurality of wall connectors is provided that interconnect adjacent roller layers of said helically rolled-up honeycomb wall element.

The inventive repair element can easily and quickly be introduced into the interior of the sandwich component, i.e. into the area of the honeycomb core, through a suitable repair opening. Preferably, the inventive repair element expands into a form that is required to securely and reliably repair the sandwich component while maintaining its bearing strength and stiffness, either in a self-actuating manner after having being released in the honeycomb core or, alternatively, after having been activated expressely.

Furthermore, the repair element can be introduced into the sandwich component starting from its damaged upper cover plate through a repair opening having a diameter that is substantially smaller than a diameter of the repair element in its expanded form. Thus, an undesired and excessive drilling out of the upper cover plate for creation of the repair opening can be omitted.

According to a preferred embodiment, at least one of the plurality of wall connectors is provided in bridge-like form as a leporello-folding.

According to a further preferred embodiment, said helically rolled-up honeycomb wall element comprises an activatable shape memory alloy.

According to a further preferred embodiment, at least one activatable gluing layer is provided on a first and/or a second axial front end of said helically rolled-up honeycomb wall element.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a perspective side view and a perspective exploded view of a sandwich component
- Figure 2 shows a schematic sectional view of the sandwich component of Figure 1 with a damaged area according to one aspect,
- Figure 3 shows the sandwich component of Figure 2 with a repair opening and a repair cavity,
- Figure 4 shows the sandwich component of Figure 3 with an associated repair element according to an embodiment that is introduced into the repair cavity, as well as a top view of the repair element in compressed form,
- Figure 5 shows the sandwich component of Figure 4 with the associated repair element mounted thereto, as well as a top view of the repair element in expanded form,
- Figure 6 shows a section of the sandwich component of Figure 3 with the associated repair element mounted thereto, which illustratively comprises an activatable gluing layer according to an embodiment, and
- Figure 7 shows the sandwich component of Figure 6 with a repair patch and a doubler patch mounted thereto.

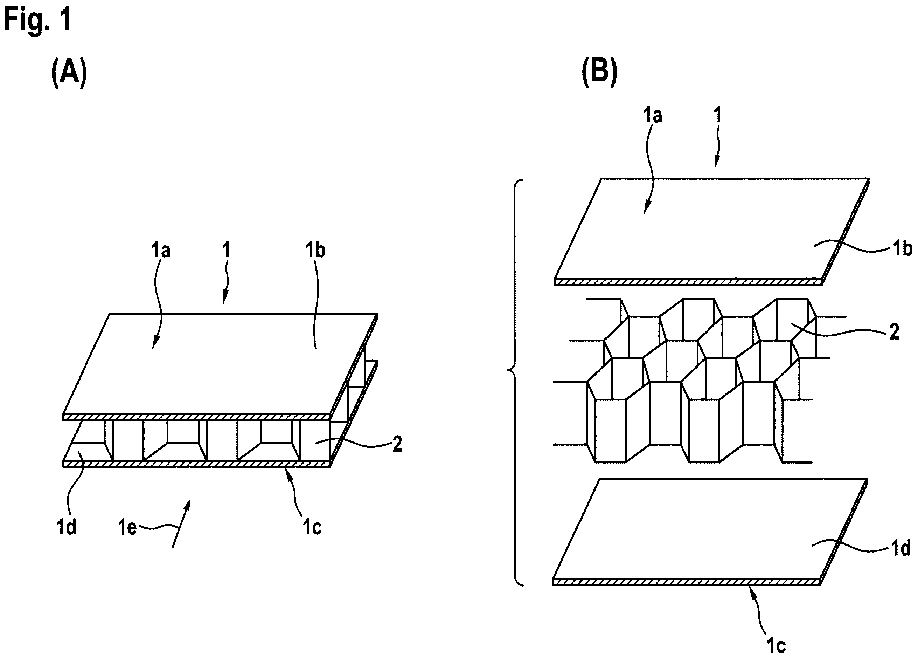

Figure 1 shows a schematic side view and a schematic exploded view of a sandwich component 1 according to the invention. The side view is designated as part (A) of Figure 1 and the exploded view as part (B) thereof, which is seen in a viewing direction illustrated by an arrow 1e in part (A).

According to one embodiment, the sandwich component 1 comprises at least a honeycomb core 2, which is arranged between a first cover plate 1b and a second cover plate 1d. The honeycomb core 2 e.g. comprises paper or paperboard that is impregnated with synthetic resin and the first and second cover plates 1b, 1d e.g. comprise metal or a metal alloy.

The sandwich component 1 is preferably adapted for implementing a cabin floor of an aircraft and, more specifically, of a rotary wing aircraft such as a helicopter. However, it should be noted that the present invention is not limited to an application to cabin floors of helicopters, but may likewise be applied generally to sandwich components that are constructed in the above described manner.

It should further be noted that the honeycomb core 2 is only illustrated schematically in Figure 1 and the following figures. However, the constitution of such a honeycomb core is well-known to the person skilled in the art, so that a more detailed illustration and description of the honeycomb core 2 can be avoided for simplicity of the drawings and brevity of the description.

Assuming that the first cover plate 1b defines a user-accessible part of the sandwich component 1 when the sandwich component 1 is used e.g. to implement a cabin floor of a helicopter, the first cover plate 1b defines an accessible upper component side 1a and represents, accordingly, an accessible upper cover plate. Consequently, the lower cover plate 1d defines an inaccessible lower component side 1c that is e.g. attached to an associated fuselage of the helicopter and represents, thus, an inaccessible lower cover plate. Therefore, the first cover plate 1b is also referred to as the "upper cover plate 1b" hereinafter and the second cover plate 1d is also referred to as the "lower cover plate 1d" hereinafter, for clarity and simplicity.

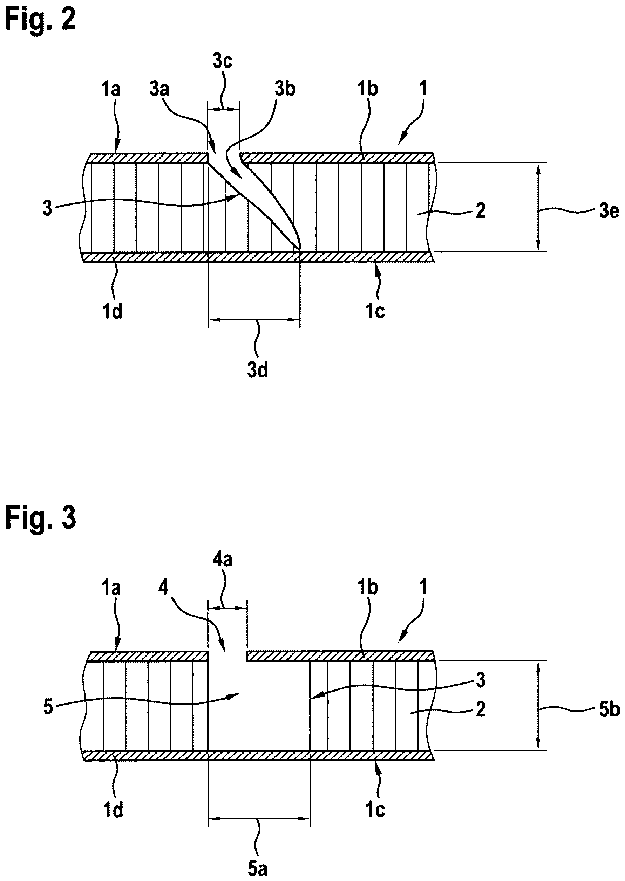

Figure 2 shows the sandwich component 1 of Figure 1 with the upper and lower cover plates 1b, 1d and the honeycomb core 2, which illustratively comprises an associated core height 3e. However, it should be noted that for simplicity and clarity only a small section of the sandwich component 1 is shown in Figure 2 and also in the following figures.

According to one embodiment, the sandwich component 1 comprises a damaged area 3 that includes at least a cover plate crack 3a of the upper cover plate 1b and a deterioration 3b of the honeycomb core 2 adjacent to the cover plate crack 3a. The cover plate crack 3a illustratively comprises a maximum crack diameter 3c. The honeycomb core deterioration 3b illustratively comprises a maximum deterioration diameter 3d which may be, and is by way of example, greater than the maximum crack diameter 3c.

In the following, a repair method for repairing the damaged area 3 of the sandwich component 1 according to one embodiment of the invention is described with reference to Figure 3 to Figure 7. Each one of Figure 3 to Figure 7 illustrates a different step of the repair method and, thus, a given stage of the repair method.

Figure 3 illustrates an initial step of the inventive repair method, which is preferably carried out starting from the upper component side 1a of the sandwich component 1. In this initial step, a repair opening 4 is created in the upper cover plate 1b, e.g. by boring using a suitable drill.

The repair opening 4 is preferably created with an associated maximum repair opening diameter 4a that is at least equal to the maximum crack diameter 3c associated with the cover plate crack 3a in the upper cover plate 1b according to Figure 2, so that there is no more cracked area in the upper cover plate 1b. By way of example, the repair opening 4 has a circular cross section. However, other cross sections with e.g. oval shape can alternatively be implemented. Likewise, polygonal cross sections or any other cross section are also contemplated.

Furthermore, an initial recess is created in prolongation to the repair opening 4 in the honeycomb core 2 and subsequently enlarged for creating in prolongation to the repair opening 4 a repair cavity 5 with a maximum repair cavity diameter 5a. The latter is preferably greater than the maximum repair opening diameter 4a and at least equal to the maximum deterioration diameter 3d according to Figure 2.

According to one aspect, the initial recess is created by boring using a suitable drill and, preferably, by boring using the same drill than for boring the repair opening 4. The initial recess is at least created with a depth that allows introducing a suitable broaching tool, such as a milling cutter, through the repair opening 4 into the initial recess for enlarging the initial recess into the repair cavity 5, preferably by undercutting the honeycomb core 2 in the region of the repair opening 4.

It should be noted that the creation of the initial recess by boring is a process which is well-known by the person skilled in the art. Therefore, this method step is not explicitly illustrated in the figures or described in more detail for brevity and conciseness.

According to one embodiment, the repair cavity 5 is created by milling using a suitable milling cutter such that the repair cavity 5 comprises a repair cavity depth 5b that is at least substantially equal to the associated core height 3e of the honeycomb core 2 according to Figure 2. Preferably, the repair cavity 5 comprises a circular cross section. However, other cross sections with e.g. oval shape can alternatively be implemented. Likewise, polygonal cross sections or any other cross section are also contemplated.

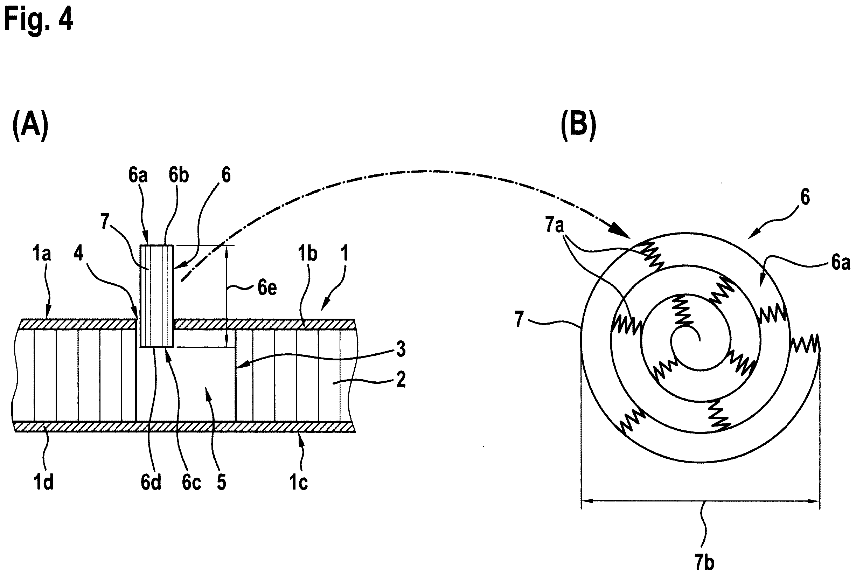

Figure 4 illustrates a subsequent step of the inventive repair method, which is preferably also carried out starting from the upper component side 1a of the sandwich component 1. In this subsequent step, a helically rolled-up repair element 6 in compressed form, which is further illustrated in part (B) of Figure 4 in an enlarged top view of an upper side 6a thereof, is introduced through the repair opening 4 into the repair cavity 5, as shown in part (A) of Figure 4. However, prior to introducing this helically rolled-up repair element 6 in compressed form through the repair opening 4 into the repair cavity 5, any existing adhesive residues in the region of the repair cavity 5 and the repair opening 4 are removed according to one aspect.

Illustratively, the helically rolled-up repair element 6 in compressed form comprises an upper side 6a and a lower side 6c, both of which define axial front ends of the helically rolled-up repair element 6 in compressed form. These axial front ends 6a, 6c are preferentially provided with associated gluing layers 6b, 6d, respectively, that are preferably activatable.

Furthermore, the helically rolled-up repair element 6 in compressed form comprises an associated element height 6e that is at most equal to the associated core height 3e of the honeycomb core 2 according to Figure 2. Preferably, this associated element height 6e is slightly smaller, so that the helically rolled-up repair element 6 precisely fits between the upper and lower cover plates 1b, 1d in the repair cavity 5.

By way of example, the helically rolled-up repair element 6 is introduced with its lower side 6c into the repair cavity 5. In order to allow an easy and smooth introduction, the helically rolled-up repair element 6 in compressed form comprises an associated diameter 7b that is maximally equal to the maximum repair opening diameter 4a of the repair opening 4 according to Figure 3. In order to obtain this associated diameter 7b, the helically rolled-up repair element 6 is preferentially radially compressed with a predetermined compression factor.

According to one embodiment, the helically rolled-up repair element 6 in compressed form comprises a honeycomb wall element 7 and a plurality of wall connectors 7a, which are preferably provided at predefined distances with respect to each other. This honeycomb wall element 7 is helically rolled-up and preferentially radially compressed together with the plurality of wall connectors 7a with the above mentioned predetermined compression factor into the compressed form. Preferably, at least one of the plurality of wall connectors 7a is provided in bridge-like form as a leporello-folding.

According to one aspect, the helically rolled-up repair element 6 and, more specifically, the honeycomb wall element 7 and/or the plurality of wall connectors 7a, comprise paper or paperboard that is impregnated with synthetic resin. Alternatively, the honeycomb wall element 7 and/or the plurality of wall connectors 7a comprise a preferably activatable and/or electrically conductive shape memory alloy and, in particular, metal. In this case, the helically rolled-up repair element 6 can be provided e.g. as a string- or strand-shaped component and manufactured using the extrusion technique.

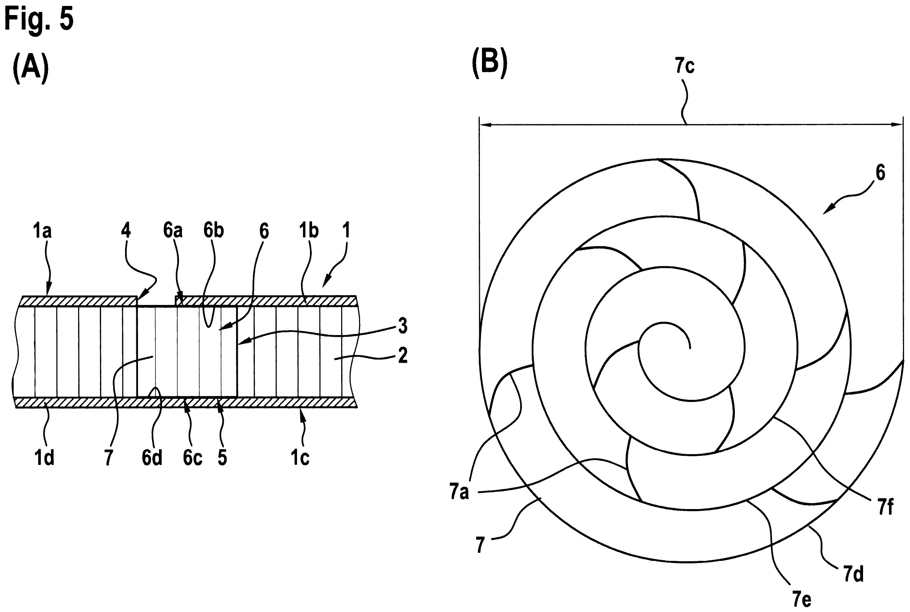

Figure 5 illustrates a subsequent step of the inventive repair method, wherein the helically rolled-up repair element 6 in the compressed form according to Figure 4 is allowed to expand in the repair cavity 5 created in the honeycomb core 2 of the sandwich component 1, as shown in part (A) of Figure 5. Allowing the helically rolled-up repair element 6 in the compressed form to expand in the repair cavity 5 preferably comprises releasing the helically rolled-up repair element 6 in the compressed form in the repair cavity 5 in order to enable a self-actuated expansion thereof. However, an expressive external stimulation or actuation of the helically rolled-up repair element 6 for expansion is likewise considered, as described by way of example below.

More specifically, the helically rolled-up repair element 6 expands from its compressed form with the diameter 7b into an expanded form with a diameter 7c, which is greater than the diameter 7b of the compressed form. In this expanded form, the helically rolled-up repair element 6 fills the repair cavity 5 at least substantially and, preferably, entirely. Preferably, the helically rolled-up repair element 6 in the expanded form, i.e. its honeycomb wall element 7, is oriented perpendicular to the upper and/or lower cover plate 1b, 1d of the sandwich component 1.

According to one embodiment, allowing the helically rolled-up repair element 6 in the compressed form to expand in the repair cavity 5 comprises activating e.g. an activatable shape memory alloy that is at least configured to support expansion of the helically rolled-up repair element 6 in the repair cavity 5 from the compressed form into the expanded form. Activating the activatable shape memory alloy comprises e.g. applying heat, electric current and/or ultrasonics to the activatable shape memory alloy.

According to the above described embodiments, such an activatable shape memory alloy may entirely or partly constitute the helically rolled-up repair element 6. However, such an activatable shape memory alloy may alternatively be embodied as a separate component which is only connected to the helically rolled-up repair element 6. For instance, one or more shape memory alloy wires or tapes can be provided and attached or integrated into the helically rolled-up repair element 6 which, in this case, can be constituted of paper or paperboard that is impregnated with synthetic resin.

The helically rolled-up repair element 6 in the expanded form is further illustrated in part (B) of Figure 5 in an enlarged top view. As can be seen from this enlarged top view, the plurality of wall connectors 7a of the helically rolled-up repair element 6 interconnect adjacent roller layers 7d, 7e, 7f that are defined by the helically rolled-up honeycomb wall element 7.

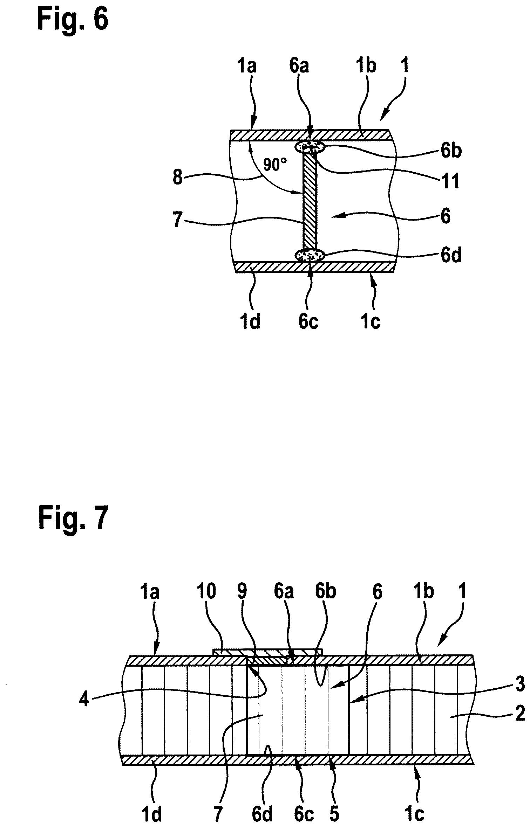

Figure 6 illustrates a subsequent step of the inventive repair method, which is preferably also carried out starting from the upper component side 1a of the sandwich component 1. In this subsequent step, the helically rolled-up repair element 6 in the expanded form, which is preferably arranged perpendicular to the upper and lower cover plates 1b, 1d of the sandwich component 1 as indicated by an orientation angle 8, is fixed to the upper cover plate 1b and/or to the lower cover plate 1d. Preferably, the helically rolled-up repair element 6 in the expanded form is fixed to the upper cover plate 1b and/or to the lower cover plate 1d by means of gluing such that the perpendicular orientation angle 8 is maintained between the helically rolled-up repair element 6 in the expanded form and the upper and lower cover plates 1b, 1d.

According to one embodiment, the gluing is performed by curing the gluing layers 6b, 6d provided on the axial front ends 6a, 6c of the helically rolled-up repair element 6 in the expanded form, which are arranged between these axial front ends 6a, 6c and the upper and lower cover plates 1a, 1b, respectively. This has the advantage that possibly occurring height differences and/or gaps between the helically rolled-up repair element 6 in the expanded form and the upper and lower cover plates 1b, 1d can be self-corrected by the cured gluing layers 6b, 6d.

The curing can be initiated by activating the gluing layers 6b, 6d which, in this case, are embodied as activatable gluing layers. Such an activating of the activatable gluing layers 6b, 6d may be performed by various suitable processes, such as e.g. applying heat, electric current and/or ultrasonics to these activatable gluing layers 6b, 6d. However, preferably heat is applied to the activatable gluing layers 6b, 6d as described hereinafter.

According to the invention, the helically rolled-up repair element 6 and, more specifically, the helically rolled-up honeycomb wall element 7 comprises at least one electrically conductive component 11. The latter is illustratively arranged in the region of the axial front end at the upper side 6a of the helically rolled-up repair element 6.

Preferably, this electrically conductive component 11 is embodied as a metal wire, but can likewise be embodied as an electrically conductive shape memory alloy with respect to the above described embodiments. More specifically, the electrically conductive component 11 is preferentially configured to allow an electric current flow there through in response to an electric current applied thereto, in order to generate the heat e.g. on the basis of an electrical resistance effect.

Figure 7 illustrates a final step of the inventive repair method, which is preferably also carried out starting from the upper component side 1a of the sandwich component 1. In this final step, the repair opening 4 is closed with a suitable cover plate repair patch 9. The latter preferably comprises dimensions that correspond at least substantially, i.e. within predefined tolerances, to the dimensions of the repair opening 4.

According to one embodiment, the cover plate repair patch 9 is fixed to an associated doubler patch 10, which is fixed in turn to the upper component side 1a of the upper cover plate 1b. The associated doubler patch 10 can be fixed in any suitable manner to the cover plate repair patch 9 and/or the upper cover plate 1b, e.g. by gluing, bonding, screwing and/or bolting.

According to one aspect, the cover plate repair patch 9 can be positioned in the repair opening 4 prior to activating and curing the activatable gluing layer 6b of the helically rolled-up repair element 6, as described above with reference to Figure 6. Thus, the cover plate repair patch 9 will optionally or additionally be glued to the upper side 6a of the helically rolled-up repair element 6.

It should be noted that further modifications are within the common knowledge of the person skilled in the art and, thus, also considered as being part of the present invention. For instance, after expansion of the helically rolled-up repair element 6 in the repair cavity 5 into the expanded form, as explained below with reference to Figure 5, an electric current can be applied to the conductive component 11 of Figure 6 prior to activating the gluing layers 6b, 6d provided with the helically rolled-up repair element 6 for measurement purposes. Thus, it can e.g. be determined on the basis of the electric current, whether the helically rolled-up repair element 6 is correctly expanded in the repair cavity 5 within predetermined tolerances and/or whether reparation affecting conditions, comprising humidity, occurred in the repair cavity 5. Furthermore, the conductive component 11 can be suitable to enable the application of induction, eddy current, X-rays and so on in order to perform other suitable measurement processes. Moreover, the conductive component 11 could even be used to implement a floor heating if the sandwich component 1 is used e.g. as cabin floor of a helicopter.

### Reference List

- 1: sandwich component
- 1a: upper component side
- 1b: upper cover plate
- 1c: lower component side
- 1d: lower cover plate
- 1e: viewing direction
- 2: honeycomb core
- 3: damaged area
- 3a: upper cover plate crack
- 3b: honeycomb core deterioration
- 3c: maximum plate crack diameter
- 3d: maximum core deterioration diameter
- 3e: honeycomb core height
- 4: circular upper cover plate repair opening
- 4a: repair opening diameter
- 5: cylindrical honeycomb core repair cavity
- 5a: repair cavity diameter
- 5b: repair cavity depth
- 6: honeycomb repair element
- 6a: repair element upper side
- 6b: upper side gluing layer
- 6c: repair element lower side
- 6d: lower side gluing layer
- 6e: repair element height
- 7: honeycomb wall element
- 7a: wall connectors
- 7b: compressed repair element diameter
- 7c: expanded repair element diameter
- 7d, 7e, 7f: roller layers
- 8: orientation angle
- 9: cover plate repair patch
- 10: doubler patch
- 11: conductive component

## Claims

1. A method of repairing a sandwich component (1) having a honeycomb core (2) with an associated core height (3e), which is arranged between a first cover plate (1b) and a second cover plate (1d), said sandwich component (1) comprising a damaged area (3) including a cover plate crack (3a) of the first cover plate (1b) and a deterioration (3b) of said honeycomb core (2) adjacent to said cover plate crack (3a), said method comprising at least the steps of:
- Creating a repair opening (4) having a maximum repair opening diameter (4a) in said first cover plate (1b),
- Creating a repair cavity (5) in said honeycomb core (2), said repair cavity (5) having a first maximum diameter (5a) that is at least equal to a maximum deterioration diameter (3d) associated with said deterioration (3b) of said honeycomb core (2) and further having a depth (5b) that is at least substantially equal to said associated core height (3e) of said honeycomb core (2),
- Introducing a helically rolled-up repair element (6) in compressed form into said repair cavity (5), said helically rolled-up repair element (6) in said compressed form having an associated element height (6e) that is at most equal to said associated core height (3e) of said honeycomb core (2) and further having a second maximum diameter (7b) that is maximally equal to said maximum repair opening diameter (4a), and
- Allowing said helically rolled-up repair element (6) in said compressed form to expand in said repair cavity (5) from said second maximum diameter (7b) into an expanded form with a third maximum diameter (7c) which is greater than said second maximum diameter (7b).

2. The method according to claim 1,
**characterized in that** said step of allowing said helically rolled-up repair element (6) in said compressed form to expand in said repair cavity (5) comprises allowing said helically rolled-up repair element (6) in said compressed form to expand such that the helically rolled-up repair element (6) in said expanded form fills out said repair cavity (5) at least substantially.

3. The method according to claim 1,
**characterized in that** said maximum repair opening diameter (4a) is at least equal to a fourth maximum diameter (3c) associated with said cover plate crack (3a), wherein said step of creating said repair cavity (5) in said honeycomb core (2) comprises creating said repair cavity (5) in said honeycomb core (2) in prolongation to said repair opening (4).

4. The method according to claim 3,
**characterized in that** said step of introducing said helically rolled-up repair element (6) in said compressed form into said repair cavity (5) comprises introducing said helically rolled-up repair element (6) in said compressed form through said repair opening (4) into said repair cavity (5).

5. The method according to claim 1,
**characterized in that** said step of allowing said helically rolled-up repair element (6) in said compressed form to expand in said repair cavity (5) into said expanded form comprises activating an activatable shape memory alloy that is at least configured to support expansion of said helically rolled-up repair element (6) in said repair cavity (5) into said expanded form, said activatable shape memory alloy constituting at least partly said helically rolled-up repair element (6).

6. The method according to claim 5,
**characterized in that** said activating of said activatable shape memory alloy comprises applying heat, electric current and/or ultrasonics to said activatable shape memory alloy.

7. The method according to claim 1,
**characterized by** further comprising the step of fixing said helically rolled-up repair element (6) in said expanded form to said first cover plate (1b) and/or said second cover plate (1d), such that said helically rolled-up repair element (6) is oriented perpendicular to said first cover plate (1b) and/or said second cover plate (1d).

8. The method according to claim 7,
**characterized in that** said step of fixing said helically rolled-up repair element (6) in said expanded form to said first cover plate (1b) and/or said second cover plate (1d) comprises gluing said helically rolled-up repair element (6) in said expanded form to said first cover plate (1b) and/or said second cover plate (1d).

9. The method according to claim 8,
**characterized in that** said gluing of said helically rolled-up repair element (6) in said expanded form to said first cover plate (1b) and/or said second cover plate (1d) comprises activating an activatable gluing layer (6b) provided on a first axial front end (6a) of said helically rolled-up repair element (6) facing said first cover plate (1b) and/or an activatable gluing layer (6d) provided on a second axial front end (6c) of said helically rolled-up repair element (6) facing said second cover plate (1d).

10. The method according to claim 9,
**characterized in that** said activating of said activatable gluing layer (6b, 6d) comprises applying heat, electric current and/or ultrasonics to said activatable gluing layer (6b, 6d).

11. The method according to claim 10,
**characterized in that** said applying of said heat to said activatable gluing layer (6b, 6d) comprises applying an electric current to a conductive component (11) provided with said helically rolled-up repair element (6) to generate said heat.

12. The method according to claim 1,
**characterized by** further comprising the steps of:
- Applying an electric current to a conductive component (11) provided with said helically rolled-up repair element (6), after expansion of said helically rolled-up repair element (6) in said repair cavity (5) into said expanded form, and
- Determining, on the basis of said electric current, whether said helically rolled-up repair element (6) is correctly expanded in said repair cavity (5) within predetermined tolerances and/or whether reparation affecting conditions, comprising humidity, occurred in said repair cavity (5).

13. A repair element (6) for repairing a sandwich component (1) having a honeycomb core (2) with an associated core height (3e), which is arranged between a first cover plate (1b) and a second cover plate (1d), said sandwich component (1) comprising a damaged area (3) including a cover plate crack (3a) of the first cover plate (1b) and a deterioration (3b) of said honeycomb core (2) adjacent to said cover plate crack (3a), said repair element (6) comprising a honeycomb wall element (7) that is helically rolled-up and radially compressed into a compressed form with an associated compressed repair element diameter (7b) which is smaller than an expanded repair element diameter (7c) of said helically rolled-up honeycomb wall element (7) in an expanded form, said helically rolled-up honeycomb wall element (7) comprising at least one conductive component (11) that is configured to allow an electric current flow, **characterized in that** a plurality of wall connectors (7a) is provided that interconnect adjacent roller layers (7d, 7e, 7f) of said helically rolled-up honeycomb wall element (7).

14. The repair element (6) according to claim 13,
**characterized in that** at least one of the plurality of wall connectors (7a) is provided in bridge-like form as a leporello-folding.

15. The repair element (6) according to claim 13,
**characterized in that** said helically rolled-up honeycomb wall element (7) comprises an activatable shape memory alloy.

16. The repair element (6) according to claim 13,
**characterized in that** at least one activatable gluing layer (6b, 6d) is provided on a first and/or a second axial front end (6a, 6c) of said helically rolled-up honeycomb wall element (7).

## Patentansprüche

1. Verfahren zum Reparieren eines Sandwichbauteils (1), das einen Wabenkern (2) mit einer zugeordneten Kernhöhe (3e) aufweist, der zwischen einer ersten Deckplatte (1b) und einer zweiten Deckplatte (1d) angeordnet ist, wobei das Sandwichbauteil (1) einen beschädigten Bereich (3) umfasst, der einen Deckplattenriss (3a) der ersten Deckplatte (1b) und einen Schaden (3b) des Wabenkerns (2) angrenzend an den Deckplattenriss (3a) umfasst, wobei das Verfahren mindestens die Schritte umfasst:
- Erzeugen einer Reparaturöffnung (4) mit einem maximalen Reparaturöffnungsdurchmesser (4a) in der ersten Deckplatte (1b),
- Erzeugen eines Reparaturhohlraums (5) in dem Wabenkern (2), wobei der Reparaturhohlraum (5) einen ersten maximalen Durchmesser (5a) aufweist, der zumindest gleich einem maximalen Schadensdurchmesser (3d) ist, der dem Schaden (3b) des Wabenkerns (2) zugeordnet ist, und der ferner eine Tiefe (5b) aufweist, die zumindest im Wesentlichen gleich der zugeordneten Kernhöhe (3e) des Wabenkerns (2) ist,
- Einführen eines spiralförmig aufgerollten Reparaturelements (6) in komprimierter Form in den Reparaturhohlraum (5), wobei das spiralförmig aufgerollte Reparaturelement (6) in der komprimierten Form eine zugeordnete Elementhöhe (6e) aufweist, die höchstens gleich der zugeordneten Kernhöhe (3e) des Wabenkerns (2) ist und ferner einen zweiten maximalen Durchmesser (7b) aufweist, der maximal gleich dem maximalen Reparaturöffnungsdurchmesser (4a) ist, und
- Aufweitenlassen des spiralförmig aufgerollten Reparaturelement (6) in der komprimierten Form in dem Reparaturhohlraum (5) von dem zweiten maximalen Durchmesser (7b) in eine aufgeweitete Form mit einem dritten maximalen Durchmesser (7c), der größer als der zweite maximale Durchmesser (7b) ist.

2. Verfahren nach Anspruch 1,
**dadurch gekennzeichnet, dass** der Schritt des Aufweitenlassens des spiralförmig aufgerollten Reparaturelements (6) in der komprimierten Form in dem Reparaturhohlraum (5) umfasst, das in der komprimierten Form spiralförmig aufgerollte Reparaturelement (6) derart aufweiten zu lassen, dass das spiralförmig aufgerollte Reparaturelement (6) in der aufgeweiteten Form den Reparaturhohlraum (5) zumindest im Wesentlichen ausfüllt.

3. Verfahren nach Anspruch 1,
**dadurch gekennzeichnet, dass** der maximale Reparaturöffnungsdurchmesser (4a) mindestens gleich einem vierten maximalen Durchmesser (3c) ist, der dem Deckplattenriss (3a) zugeordnet ist, wobei der Schritt des Erzeugens des Reparaturhohlraums (5) in dem Wabenkern (2) das Erzeugen des Reparaturhohlraums (5) in dem Wabenkern (2) in Verlängerung der Reparaturöffnung (4) umfasst.

4. Verfahren nach Anspruch 3,
**dadurch gekennzeichnet, dass** der Schritt des Einführens des in der komprimierten Form spiralförmig aufgerollten Reparaturelements (6) in den Reparaturhohlraum (5) das Einführen des spiralförmig aufgerollten Reparaturelements (6) in der komprimierten Form durch die Reparaturöffnung (4) in den Reparaturhohlraum (5) umfasst.

5. Verfahren nach Anspruch 1,
**dadurch gekennzeichnet, dass** der Schritt des Aufweitenlassens des spiralförmig aufgerollten Reparaturelements (6) in der komprimierten Form in dem Reparaturhohlraum (5) in die aufgeweitete Form das Aktivieren einer aktivierbaren Formgedächtnislegierung umfasst, die zumindest konfiguriert ist, um die Aufweitung des spiralförmig aufgerollten Reparaturelements (6) in dem Reparaturhohlraum (5) in die aufgeweitete Form zu unterstützen, wobei die aktivierbare Formgedächtnislegierung zumindest teilweise das spiralförmig aufgerollte Reparaturelement (6) bildet.

6. Verfahren nach Anspruch 5,
**dadurch gekennzeichnet, dass** das Aktivieren der aktivierbaren Formgedächtnislegierung das Anwenden von Wärme, elektrischem Strom und/oder Ultraschall auf die aktivierbare Formgedächtnislegierung umfasst.

7. Verfahren nach Anspruch 1,
**dadurch gekennzeichnet, dass** es ferner den Schritt des Befestigens des spiralförmig aufgerollten Reparaturelements (6) in der aufgeweiteten Form an der ersten Deckplatte (1b) und/oder der zweiten Deckplatte (1d) umfasst, so dass das spiralförmig aufgerollte Reparaturelement (6) senkrecht zu der ersten Deckplatte (1b) und/oder der zweiten Deckplatte (1d) ausgerichtet ist.

8. Verfahren nach Anspruch 7,
**dadurch gekennzeichnet, dass** der Schritt des Befestigens des spiralförmig aufgerollten Reparaturelements (6) in der aufgeweiteten Form an der ersten Deckplatte (1b) und/oder der zweiten Deckplatte (1d) das Ankleben des spiralförmig aufgerollten Reparaturelements (6) in der aufgeweiteten Form an der ersten Deckplatte (1b) und/oder der zweiten Deckplatte (1d) umfasst.

9. Verfahren nach Anspruch 8,
**dadurch gekennzeichnet, dass** das Ankleben des spiralförmig aufgerollten Reparaturelements (6) in der aufgeweiteten Form an die erste Deckplatte (1b) und/oder die zweite Deckplatte (1d) das Aktivieren einer aktivierbaren Klebeschicht (6b), die an einem der ersten Deckplatte (1b) zugewandten ersten axialen Vorderende (6a) des spiralförmig aufgerollten Reparaturelements (6) vorgesehen ist, und/oder einer aktivierbaren Klebeschicht (6d), die an einem der zweiten Deckplatte (1d) zugewandten zweiten axialen Vorderende (6c) des spiralförmig aufgerollten Reparaturelements (6) vorgesehen ist, umfasst.

10. Verfahren nach Anspruch 9,
**dadurch gekennzeichnet, dass** das Aktivieren der aktivierbaren Klebeschicht (6b, 6d) das Aufbringen von Wärme, elektrischem Strom und/oder Ultraschall auf die aktivierbare Klebeschicht (6b, 6d) umfasst.

11. Verfahren nach Anspruch 10,
**dadurch gekennzeichnet, dass** das Aufbringen der Wärme auf die aktivierbare Klebeschicht (6b, 6d) das Anlegen eines elektrischen Stroms an eine mit dem spiralförmig aufgerollten Reparaturelement (6) bereitgestellte leitfähige Komponente (11) umfasst, um die Wärme zu erzeugen.

12. Verfahren nach Anspruch 1,
**dadurch gekennzeichnet, dass** es ferner die Schritte umfasst:
- Anlegen eines elektrischen Stroms an eine mit dem spiralförmig aufgerollten Reparaturelement (6) bereitgestellte leitfähige Komponente (11) nach dem Aufweiten des spiralförmig aufgerollten Reparaturelements (6) in dem Reparaturhohlraum (5) in die aufgeweitete Form, und
- Bestimmen, auf der Basis des elektrischen Stroms, ob das spiralförmig aufgerollte Reparaturelement (6) in dem Reparaturhohlraum (5) innerhalb vorgegebener Toleranzen korrekt aufgeweitet ist und/oder ob reparaturbeeinflussende Bedingungen, darunter Feuchtigkeit, in dem Reparaturhohlraum (5) aufgetreten sind.

13. Reparaturelement (6) zum Reparieren eines Sandwichbauteils (1), das einen Wabenkern (2) mit einer zugeordneten Kernhöhe (3e) aufweist, der zwischen einer ersten Deckplatte (1b) und einer zweiten Deckplatte (1d) angeordnet ist, wobei das Sandwichbauteil (1) einen beschädigten Bereich (3) umfasst, der einen Deckplattenriss (3a) der ersten Deckplatte (1b) und einen Schaden (3b) des Wabenkerns (2) angrenzend an den Deckplattenriss (3a) umfasst, wobei das Reparaturelement (6) ein Wabenwandelement (7) umfasst, das spiralförmig aufgerollt und radial komprimiert ist in eine komprimierte Form mit einem zugeordneten komprimierten Reparaturelementdurchmesser (7b), der kleiner ist als ein aufgeweiteter Reparaturelementdurchmesser (7c) des spiralförmig aufgerollten Wabenwandelements (7) in einer aufgeweiteten Form, wobei das spiralförmig aufgerollte Wabenwandelement (7) mindestens eine leitfähige Komponente (11) umfasst, die konfiguriert ist, um einen elektrischen Stromfluss zu ermöglichen, **dadurch gekennzeichnet, dass** eine Mehrzahl von Wandverbindern (7a) vorgesehen ist, die benachbarte Rollenschichten (7d, 7e, 7f) des spiralförmig aufgerollten Wabenwandelements (7) miteinander verbinden.

14. Reparaturelement (6) nach Anspruch 13,
**dadurch gekennzeichnet, dass** mindestens eine der Mehrzahl von Wandverbindern (7a) in brückenartiger Form als Leporello-Faltung vorgesehen ist.

15. Reparaturelement (6) nach Anspruch 13,
**dadurch gekennzeichnet, dass** das spiralförmig aufgerollte Wabenwandelement (7) eine aktivierbare Formgedächtnislegierung umfasst.

16. Reparaturelement (6) nach Anspruch 13,
**dadurch gekennzeichnet, dass** mindestens eine aktivierbare Klebeschicht (6b, 6d) an einem ersten und/oder einem zweiten axialen Vorderende (6a, 6c) des spiralförmig aufgerollten Wabenwandelements (7) vorgesehen ist.

## Revendications

1. Procédé de réparation d'un composant sandwich (1) ayant un noyau (2) en nid d'abeille avec une hauteur (3e) de noyau associée, qui est aménagé entre une première plaque de revêtement (1b) et une seconde plaque de revêtement (1d), ledit composant sandwich (1) comprenant une zone endommagée (3) incluant une fissure (3a) de plaque de revêtement de la première plaque de revêtement (1b) et une détérioration (3b) dudit noyau (2) en nid d'abeille adjacente à ladite fissure (3a) de plaque de revêtement, ledit procédé prévoyant au moins les étapes de :
- création d'une ouverture (4) de réparation ayant un diamètre maximum (4a) d'ouverture de réparation dans ladite première plaque de revêtement (1b),
- création d'une cavité (5) de réparation dans ledit noyau (2) en nid d'abeille, ladite cavité (5) de réparation ayant un premier diamètre maximum (5a) qui est au moins égal à un diamètre maximum (3d) de détérioration associé à ladite détérioration (3b) dudit noyau (2) en nid d'abeille et ayant en outre une profondeur (5b) qui est au moins substantiellement égale à ladite hauteur (3e) de noyau associée dudit noyau (2) en nid d'abeille,
- introduction d'un élément (6) de réparation enroulé de façon hélicoïdale dans une configuration comprimée à l'intérieur de ladite cavité (5) de réparation, ledit élément (6) de réparation enroulé de façon hélicoïdale en configuration comprimée ayant une hauteur (6e) d'élément associée qui est au plus égale à ladite hauteur (3e) de noyau associée dudit noyau (2) en nid d'abeille et ayant en outre un deuxième diamètre maximum (7b) qui est au maximum égal audit diamètre maximum (4a) d'ouverture de réparation, et
- permettre audit élément (6) de réparation enroulé de façon hélicoïdale en configuration comprimée de s'expanser dans ladite cavité (5) de réparation depuis ledit deuxième diamètre maximum (7b) jusqu'à une forme expansée avec un troisième diamètre maximum (7c) qui est plus grand que ledit deuxième diamètre maximum (7b).

2. Procédé selon la revendication 1,
**caractérisé en ce que** ladite étape permettant audit élément (6) de réparation enroulé de façon hélicoïdale en configuration comprimée de s'expanser dans ladite cavité (5) de réparation prévoit de permettre audit élément (6) de réparation enroulé de façon hélicoïdale en configuration comprimée de s'expanser de façon que l'élément (6) de réparation enroulé de façon hélicoïdale en configuration dilatée remplisse ladite cavité (5) de réparation au moins substantiellement.

3. Procédé selon la revendication 1,
**caractérisé en ce que** ledit diamètre maximum (4a) d'ouverture de réparation est au moins égal à un quatrième diamètre maximum (3c) associé à ladite fissure (3a) de plaque de revêtement, dans lequel ladite étape de création de ladite cavité (5) de réparation dans ledit noyau (2) en nid d'abeille prévoit de créer ladite cavité (5) de réparation dans ledit noyau (2) en nid d'abeille dans le prolongement de ladite ouverture (4) de réparation.

4. Procédé selon la revendication 3,
**caractérisé en ce que** ladite étape d'introduction dudit élément (6) de réparation enroulé de façon hélicoïdale en configuration comprimée à l'intérieur de ladite cavité (5) de réparation prévoit d'introduire ledit élément (6) de réparation enroulé de façon hélicoïdale sous forme comprimée par ladite ouverture (4) de réparation à l'intérieur de ladite cavité (5) de réparation.

5. Procédé selon la revendication 1,
**caractérisé en ce que** ladite étape permettant audit élément (6) de réparation enroulé de façon hélicoïdale en configuration comprimée de se dilater dans ladite cavité (5) de réparation en configuration dilatée prévoit d'activer un alliage activable à mémoire de forme qui est au moins configuré pour concourir à la dilatation dudit élément (6) de réparation enroulé de façon hélicoïdale dans ladite cavité (5) de réparation en configuration dilatée, ledit alliage activable à mémoire de forme constituant au moins en partie ledit élément (6) de réparation enroulé de façon hélicoïdale.

6. Procédé selon la revendication 5,
**caractérisé en ce que** ladite activation dudit alliage activable à mémoire de forme prévoit d'appliquer de la chaleur, un courant électrique et/ou des ultrasons audit alliage activable à mémoire de forme.

7. Procédé selon la revendication 1,
**caractérisé en ce qu'**il prévoit en outre l'étape de fixation dudit élément (6) de réparation enroulé de façon hélicoïdale en forme dilatée sur ladite première plaque de revêtement (1b) et/ou sur ladite seconde plaque de revêtement (1d), de façon que ledit élément (6) de réparation enroulé de façon hélicoïdale soit orienté perpendiculairement à ladite première plaque de revêtement (1b) et/ou à ladite seconde plaque de revêtement (1d).

8. Procédé selon la revendication 7,
**caractérisé en ce que** ladite étape de fixation dudit élément (6) de réparation enroulé de façon hélicoïdale en configuration dilatée sur ladite première plaque de revêtement (1b) et/ou sur ladite seconde plaque de revêtement (1d) prévoit de coller ledit élément (6) de réparation enroulé de façon hélicoïdale en configuration dilatée à ladite première plaque de revêtement (1b) et/ou à ladite seconde plaque de revêtement (1d).

9. Procédé selon la revendication 8,
**caractérisé en ce que** ledit collage dudit élément (6) de réparation enroulé de façon hélicoïdale en configuration dilatée à ladite première plaque de revêtement (1b) et/ou à ladite seconde plaque de revêtement (1d) prévoit d'activer une couche activable (6b) de collage prévue sur une première extrémité avant axiale (6a) dudit élément (6) de réparation enroulé de façon hélicoïdale faisant face à ladite première plaque de revêtement (1b) et/ou d'une couche activable (6d) de collage prévue sur une seconde extrémité avant axiale (6c) dudit élément (6) de réparation enroulé de façon hélicoïdale faisant face à ladite seconde plaque de revêtement (1d).

10. Procédé selon la revendication 9,
**caractérisé en ce que** ladite activation de ladite couche activable (6b, 6d) de collage prévoit d'appliquer de la chaleur, un courant électrique et/ou des ultrasons à ladite couche activable (6b, 6d) de collage.

11. Procédé selon la revendication 10,
**caractérisé en ce que** ladite application de ladite chaleur à ladite couche activable (6b, 6d) de collage prévoit d'appliquer un courant électrique à un composant conducteur (11) prévu dans ledit élément (6) de réparation enroulé de façon hélicoïdale pour générer ladite chaleur.

12. Procédé selon la revendication 1,
**caractérisé en ce qu'**il prévoit en outre les étapes de :
- Application d'un courant électrique à un composant conducteur (11) prévu dans ledit élément (6) de réparation enroulé de façon hélicoïdale, après dilatation dudit élément (6) de réparation enroulé de façon hélicoïdale dans ladite cavité (5) de réparation en configuration dilatée, et
- Détermination, sur la base dudit courant électrique, si ledit élément (6) de réparation enroulé de façon hélicoïdale s'est correctement dilaté à l'intérieur de ladite cavité (5) de réparation dans des marges de tolérances prédéterminées et/ou si des circonstances affectant la réparation, comprenant la présence d'humidité, ont eu lieu dans ladite cavité (5) de réparation.

13. Elément (6) de réparation pour réparer un composant sandwich (1) ayant un noyau (2) en nid d'abeille avec une hauteur (3e) de noyau associée, qui est aménagé entre une première plaque de revêtement (1b) et une seconde plaque de revêtement (1d), ledit composant sandwich (1) comprenant une zone endommagée (3) incluant une fissure (3a) de plaque de revêtement de la première plaque de revêtement (1b) et une détérioration (3b) dudit noyau (2) en nid d'abeille adjacente à ladite fissure (3a) de plaque de revêtement, ledit élément (6) de réparation comprenant un élément (7) de paroi de nid d'abeille qui est enroulé de façon hélicoïdale et est comprimé radialement sous une forme comprimée avec un diamètre (7b) d'élément de réparation comprimé associé qui est plus petit qu'un diamètre (7c) d'élément de réparation dilaté dudit élément (7) de paroi de nid d'abeille enroulé de façon hélicoïdale sous une forme dilatée, ledit élément (7) de paroi de nid d'abeille enroulé de façon hélicoïdale comprenant au moins un composant conducteur (11) qui est configuré pour permettre le passage d'un courant électrique, **caractérisé en ce qu'**une pluralité de connecteurs (7a) de paroi est prévue qui raccorde entre elles les couches (7d, 7e, 7f) d'enroulement adjacentes dudit élément (7) de paroi de nid d'abeille enroulé de façon hélicoïdale.

14. Elément (6) de réparation selon la revendication 13,
**caractérisé en ce que** au moins l'un parmi la pluralité de connecteurs (7a) de paroi est réalisé sous la forme d'une liaison en accordéon.

15. Elément (6) de réparation selon la revendication 13,
**caractérisé en ce que** ledit élément (7) de paroi de nid d'abeille enroulé de façon hélicoïdale comprend un alliage activable à mémoire de forme.

16. Elément (6) de réparation selon la revendication 13,
**caractérisé en ce qu'**au moins une couche activable (6b, 6d) de collage est prévue sur une première et/ou sur une seconde extrémité avant axiale (6a, 6c) dudit élément (7) de paroi de nid d'abeille enroulé de façon hélicoïdale.
